Europäisches Patentamt

European Patent Office

Office européen des brevets

(19)

(11) Publication number: **0 097 358**
**B1**

# (12) EUROPEAN PATENT SPECIFICATION

(45) Date of publication of patent specification: 03.09.86

(21) Application number: 83106032.2

(22) Date of filing: 21.06.83

(51) Int. Cl.⁴: **H 01 M 4/84,** H 01 M 4/73, B 22 D 19/14

(54) Preforms for reinforcement of battery grids.

(30) Priority: 21.06.82 US 390538
21.06.82 US 390537

(43) Date of publication of application:
04.01.84 Bulletin 84/01

(45) Publication of the grant of the patent:
03.09.86 Bulletin 86/36

(84) Designated Contracting States:
DE FR GB IT NL

(56) References cited:
FR-A- 879 329
FR-A-1 181 142
US-A-4 282 922
US-A-4 312 398

EXTENDED ABSTRACTS, vol. 81-2, October
1981, pages 147-148, abstract no. 57,
Pennington, New Jersey, USA H.S.
HARTMANN et al.: "Alumina "Fiber FP"
reinforced pure lead composites for battery
electrodes"

(73) Proprietor: E.I. DU PONT DE NEMOURS AND
COMPANY
1007 Market Street
Wilmington Delaware 19898 (US)

(72) Inventor: Hartmann, Hans Siegfried
2303 Delaware Avenue
Wilmington Delaware 19806 (US)
Inventor: Duffy, Joseph James
611 S.Brownleaf Road
Newark Delaware 19713 (US)

(74) Representative: Abitz, Walter, Dr.-Ing. et al
Abitz, Morf, Gritschneder, Freiherr von
Wittgenstein Postfach 86 01 09
D-8000 München 86 (DE)

(56) References cited:

EXTENDED ABSTRACTS, vol. 81-2, October
1981, pages 395-396, abstract no. 158,
Pennington, New Jersey, USA J.R. WILLHITE et
al.: "Anodic corrosion of fiber composite
reinforced lead-acid battery grids"

## Description

### Background of the invention

This invention relates to improved techniques for battery grid manufacture. Lead-acid batteries and their operation are well-known. The grids are the support for the active material of the plates and conduct the current to and from the active materials. The grid must be corrosion resistant and must possess sufficient strength and stiffness to prevent damage or distortion during manufacture of the grids, preparation of the plate from the grid and construction of the battery itself. Pure lead is the most corrosion resistant material for lead-acid battery grids, but it is weak and tends to creep. In use, the grids are subject to stress due to their own weight and the weight of active material supported by the grids and the stresses imposed through expansion and contraction of the active material in the charge-discharge cycle. If the grids are deformed during use, the active material is isolated or shed and lost for the electrochemical reaction. From the standpoint of economies of weight, cost and cell capacity, grid thickness is also a significant factor.

Battery grids are generally made by a casting process. The grid-casting machine consists of a book or center-parting grid mold, trimming mechanism and melting pots. The grid mold consists of two cast iron parts, each with a grid design for a face. The mold is heated before introduction of the molten metal in order to avoid premature solidification. The lead or lead alloy is first melted in the melting pots and transported to the grid mold. After the mold is filled with molten metal, it is allowed to cool. It is then opened, the cast grid is removed and the operation begins anew for fabrication of the next grid. This is done on a mass production schedule and it is important that no undue delay occurs in the cycle.

Alloys are generally used as the preferred grid material because pure lead is easily deformed. The proper selection of the lead alloy depends on the intended use and economics of the lead-acid battery application because the alloys generally introduce other problems such as cost, corrosion, difficulties in manufacture or reduced battery life.

Reinforcement of grids is a relatively new concept and shows promise of resolving many of the problems mentioned above. Efforts to use fiber to reinforce the grid structure have been found to present problems in manufacture. Hand lay-up of filaments in the open casting mold is a time-consuming operation that is inconsistent with mass production techniques. Also, conditions around the grid casting area are not conducive to careful hand lay-up of the filaments. In some cases handling of the filaments causes discontinuities and breaks. When this occurs in the casting mold, it results in poor quality grids. The instant invention offers a solution to these problems.

### Summary of the invention

This invention provides a network sheet preform for reinforcement of a lead or lead alloy battery grid comprising an array of spaced bundles of inorganic filaments superimposed upon and directionally displaced from another array of spaced bundles of inorganic filaments, said arrays being bonded to each other at the filament bundle crossover points. Preferably, bonding is achieved with a fugitive binder having a melting point of at least about 0°C and a boiling point below about 300°C. The spaced bundles in each array are preferably essentially parallel to each other. This invention provides a method for making preforms comprising depositing bundles of inorganic filaments in the grooves of a fixture having a group of grooves intersecting another group of grooves, wetting the filament bundles with the fugitive binder at a temperature above its melting point, freezing the fugitive binder thereby bonding the filamentary bundles at crossover points and removing the frozen preform from the fixture. Also provided is a method for making reinforced lead or lead alloy battery grids comprising placing the preform into the casting mold, closing the mold, heating the mold and its contents drawing a vacuum on the mold cavity and introducing molten lead or lead alloy to infiltrate the filament bundles and fill the mold, cooling the mold to solidify the lead or lead alloy, opening the mold and removing the reinforced grid.

### Description of the drawing

Fig. 1 is a schematic of a preform.

Fig. 2 is a schematic of a section of a preform fixture.

### Detailed description of the invention

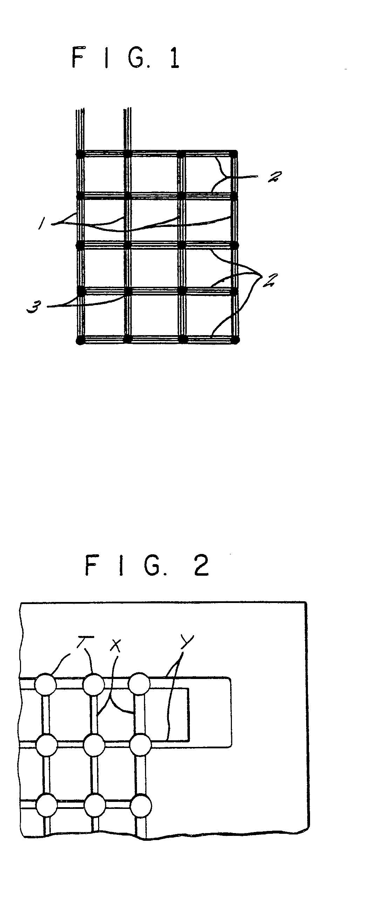

The preform of the invention is a grid or skeletal framework preferably for reinforcement of a lead or lead alloy battery grid. It may correspond in configuration to a battery grid and comprises a preformed sheet structure wherein an array or assemblage of spaced bundles of inorganic filaments lying in a single plane is bonded at crossover points to a cross-lapped array of spaced bundles of inorganic filaments. Fig. 1 is a schematic of such a preform in which assemblage 1 of essentially parallel bundles of inorganic filaments overlaps assemblage 2 of essentially parallel bundles of inorganic filaments and is attached thereto at crossovers through bonds 3. It is preferred that fugitive binders be used to effect bonding at the crossover points. For example, the parallel bundles of inorganic filaments in each of assemblages 1 and 2 may be coated with ice and attachment at crossovers may be through bonds of ice. The spacing of filament bundles and the size and shape of the preform are selected so that the preform can be readily inserted in the grid casting mold with the filamentary bundles resting in the mold depressions forming the X and Y direction bars of the grid to be cast. Normally the X and Y bar directions are perpendicular.

The filament bundles of the preform should be made up of inorganic high temperature resistant fibers. In this class are glass, graphite and alumina fiber. The bundles are preferably untwisted or only slightly twisted and should bear little or no finish oils. It is preferred to use alumina fiber and still more preferred to use the lead coated fiber described in Hartmann U.S. Patent No. 4,282,922 because of the fact that it is more easily wettable by lead or lead alloys. A useful range of reinforcement for the grid is from 1 to 25 volume percent, preferably from 2 to 8 volume percent.

A great variety of materials can be used to bond intersecting filament bundles at crossover points. It is preferred that little or no residual foreign matter remain in the battery grid, that is, the grid should consist essentially of lead or lead alloy and the inorganic fiber. Organic residues are particularly undesirable because they interfere with the wetting of the inorganic fiber by the lead or lead alloy. A lead paste of lead powder and water has been found useful when applied at the crossovers and heated to melt the lead which then bonds the intersecting yarns as the lead solidifies. Lead foil may be used to tie the bundles at crossovers and then heat applied to fuse the lead and create the bond. Dispersions of lead containing glass as described in the aforementioned Hartmann patent may be deposited at the crossovers and then heated with a reducing flame to fuse the glass and to provide a lead coating.

A fugitive binder having a melting point of at least about 0°C and a boiling point below about 300°C is preferably used to bond the filament bundles at crossovers. Ice is a preferred fugitive binder since it is inexpensive and has the advantage that it is easily and completely removed after it has served its purpose. Thus, where the frozen preform is placed in the grid casting mold and the mold closed, the ice turns to water. Evacuation of the mold by vacuum to remove air prior to introduction of molten lead or lead alloy, results also in removal of water leaving only the inorganic filament bundles in the grid casting mold. The fugitive binder should preferably be one that is relatively inert at temperatures below its boiling point. Illustrative of such substances are naphthalene, glycerine, ice and dodecanol.

Fig. 2 represents a fixture which may be used to prepare the preform. It is not the same as the mold which is used for casting the battery grid. It may be formed from plastic, ceramic, metal or other convenient material depending on the bonding material to be used. As shown, it has X- and Y-direction parallel grooves and holes through the fixture at intersection T of the grooves. The purpose of the holes will be described in detail in the Example 1 which follows. In practice, the filament bundles or yarns are laid up by hand or mechanically in the X-direction grooves of the fixture and then in the Y-direction grooves. An assemblage of parallel filament bundles may be prepared in a dispensing cartridge and fed to the fixture directly from the cartridge as a group of bundles. Conveniently the overall configuration of the preform fixture corresponds to that of the battery grid casting mold. The group of X-direction filament bundles are then bonded to the group of Y-direction filament bundles at crossover points to form an integral structure and the preform is removed from the fixture.

A method of bonding involving the use of fugitive binders will now be disclosed. After the filamentary bundles are deposited in the preform fixture as before, water or other suitable fugitive substance may be introduced to wet the filament bundles. Alternatively, wet filament bundles are laid in the grooves of the preform fixture. In either case, the water on the fiber array is frozen and the ice serves to bond filamentary bundles at crossover points. The preforms are removed and kept frozen until used.

The preforms are next taken to the battery grid casting area and placed in the open molds which are then closed. While symmetrical center parting molds are common in the industry, an asymmetric mold with the grooves in one side deeper than those on the other will be useful with heavier preforms. The casting molds are heated as mentioned previously to prevent premature solidification of the molten metal which is subsequently introduced. A vacuum is then applied to exhaust gases from the mold cavity. Any water or steam flashing off from the ice can escape in a similar manner. Molten lead or lead alloy is then introduced into the mold and allowed to solidify by cooling. Application of vacuum has been found to facilitate infiltration of the fiber bundles by the molten metal. Pressure may also be applied to assist infiltration. The mold is then cooled to solidify the molten metal, opened and the battery grid removed making the mold ready to receive the next preform.

The following example is illustrative of the invention and is not intended to limit it in any way.

Example I

From a bobbin of 800 filament (about 20 micrometres per filament) lead coated alumina yarn such as described in U.S. Patent No. 4,282,922, lengths were cut to place one yarn end in each cavity of the fixture shown in Fig. 2, then placed into the fixture first in one direction and then in the other. A dollop of lead/water paste was then placed at each crossover point. Using an oxyacetylene torch with a neutral flame, each dollop of paste was melted from beneath the fixture through the holes referred to in the earlier description and allowed to cool which fused the many separate yarn bundles into a readily handled preform similar to that of Fig. 1, having a geometric pattern matching that of the grid casting mold. This preform was then placed into the casting mold, the mold sections closed, clamped and then preheated by submerging the mold into a pot of molten lead. During the preheat cycle, a vacuum was drawn on the mold cavity to evacuate air and moisture. Lead was then admitted to the mold cavity by removing a plug in a tube entering the bottom of the vertically positioned mold. A freeze plug positioned in the vacuum line stops lead flow when the mold is full. The mold is then removed from the lead pot and transferred to a cooling station where a water spray is used to expedite cooling. The cast grid is then removed from the mold. The gate and riser are then trimmed, completing the fabrication process.

Example II

Lead coated yarn similar to that used in Example I was moved from a bobbin through a water bath thoroughly wetting the fiber bundle. The yarn was cut to the length of each cavity of a freezing fixture shown in Fig. 2, then placed into the fixture first in one direction and then in the other. The wet fiber in its fixture was then frozen by passing a cold gas over the fiber array or by fogging the fiber array with a stream of solid carbon dioxide particles from a high pressure cylinder. The preform was removed from the fixture by moving ejector pins through the holes in the fixture at the crossover points, freeing the unitary preform. It was then kept in a freezing chamber for storage. This preform geometry matched that of the lead casting mold. This preform was later placed into the casting mold, the mold halves closed, clamped and then preheated in an oven. During the preheat cycle, a vacuum was drawn on the mold cavity to evacuate air and moisture. The mold was then submerged into a pot of lead. Lead was admitted to the mold cavity by removing a plug in a tube entering the bottom of the vertically positioned mold. A freeze plug positioned in the vacuum line stopped lead flow when the mold was full. The mold was then removed from the lead pot and transferred to a cooling station where a water spray was used to expedite cooling. The cast grid was then removed from the mold. The gate and riser were then trimmed, completing the fabrication process.

## Claims

1. A network sheet preform for reinforcing a lead or lead alloy battery grid comprising an array of spaced bundles of inorganic filaments superimposed upon and directionally displaced from another array of spaced bundles of inorganic filaments, said arrays being bonded to each other at filament bundle crossover points.

2. The preform of Claim 1 wherein the inorganic filaments are alumina fibers.

3. The preform of Claim 2 wherein the arrays are bonded to each other at filament bundle crossover points through bonds of a fugitive binder having a melting point of at least about 0°C and a boiling point below about 300°C.

4. The preform of Claim 3 wherein the fugitive binder is ice.

5. The preform of Claim 1 where lead is used to bond the arrays to each other.

6. The preform of Claim 1 wherein the bundles of filaments in each array are essentially parallel.

7. The preform of Claim 6 wherein the arrays are perpendicular to each other.

8. A method for making a preform comprising depositing bundles of inorganic filaments in the grooves of a fixture having a group of grooves intersecting another group of grooves, wetting the bundles by introducing a fugitive binder at a temperature above its melting point into the grooves, the fugitive binder having a melting point of at least 0°C and a boiling point below about 300°C, freezing the fugitive binder thereby bonding the filamentary bundles at crossover points and removing the frozen preform from the mold.

9. A method for making a preform for reinforcing a lead or lead alloy battery grid, comprising depositing bundles of inorganic filaments in the grooves of a fixture having a group of grooves intersecting another group of grooves, forming a bond at each crossover point thereby bonding the groups of filamentary bundles into an integral structure and removing the preform from the fixture.

10. The method of Claim 9 wherein the bond is formed by introducing a fugitive binder at a temperature above its melting point into the grooves, the fugitive binder having a melting point of at least 0°C and a boiling point below about 300°C, and freezing the fugitive binder thereby bonding the filamentary bundles at crossover points into an integral structure.

11. A method for making a reinforced lead or lead alloy battery grid comprising placing the preform of Claim 1 into a battery grid casting mold, closing the mold, heating the mold and its contents to a temperature at least as high as the melting point of the lead or lead alloy, drawing a vacuum on the mold cavity and introducing lead or lead alloy to infiltrate the filament bundles and fill the mold, cooling the mold to solidify the lead or lead alloy, opening the mold and removing the reinforced grid.

## Patentansprüche

1. Netzwerkartige plattenförmige Vorform zur Verstärkung eines Batteriegitters aus Blei oder einer Bleilegierung, umfassend eine Anordnung von beabstandeten Bündeln anorganischer Fäden, die einer weiteren Anordnung von beabstandeten Bündeln anorganischer Fäden überlagert und hiervon richtungsmäßig versetzt sind, wobei die Anordnungen an den Kreuzungspunkten der Fadenbündel miteinander verbunden sind.

2. Vorform nach Anspruch 1, bei der die anorganischen Fäden Aluminiumoxidfasern sind.

3. Vorform nach Anspruch 2, bei der die Anordnungen an den Kreuzungspunkten der Fadenbündel durch die Bindungen eines flüchtigen Bindemittels miteinander verbunden sind, das einen Schmelzpunkt von mindestens etwa 0°C und einen Siedepunkt von unter etwa 300°C hat.

4. Vorform nach Anspruch 3, bei der das flüchtige Bindemittel Eis ist.

5. Vorform nach Anspruch 1, bei der zum Verbinden der Anordnungen Blei verwendet wird.

6. Vorform nach Anspruch 1, bei der die Fadenbündel in jeder Anordnung im wesentlichen parallel verlaufen.

7. Vorform nach Anspruch 6, bei der die Anordnungen zueinander senkrecht verlaufen.

8. Verfahren zur Herstellung einer Vorform, umfassend das Ablegen von Bündeln anorganischer Fäden in die Nuten einer Fixiervorrichtung, welche eine Gruppe von Nuten aufweist, die eine weitere Gruppe von Nuten schneiden, das Befeuchten der Bündel durch Einführen eines flüchtigen Bindemittels bei einer über dessen Schmelzpunkt liegenden Temperatur in die Nuten, wobei das flüchtige Bindemittel einen Schmelzpunkt von mindestens 0°C und einen Siedepunkt von unter etwa 300°C hat, das Erstarrenlassen des flüchtigen Bindemittels, wodurch die Fadenbündel an den Kreuzungspunkten miteinander verbunden werden, und das Entfernen der erstarrten Vorform aus der Form.

9. Verfahren zur Herstellung einer Vorform zur Verstärkung eines Batteriegitters aus Blei oder einer Bleilegierung, umfassend das Ablegen von Bündeln anorganischer Fäden in den Nuten einer Fixiervorrichtung, welche eine Gruppe von Nuten aufweist, die eine weitere Gruppe von Nuten schneiden, das Ausbilden einer Verbindung an jedem Kreuzungspunkt, wodurch die Gruppen von Fadenbündeln zu einem einstückigen Gebilde miteinander verbunden werden, und das Entfernen der Vorform aus der Fixiervorrichtung.

10. Verfahren nach Anspruch 9, bei welchem die Verbindung hergestellt wird durch Einführen eines über seinem Schmelzpunkt befindlichen flüchtigen Bindemittels in die Nuten, wobei das flüchtige Bindemittel einen Schmelzpunkt von mindestens 0°C und einen Siedepunkt von unter etwa 300°C hat, und durch Erstarrenlassen des flüchtigen Bindemittels, wodurch die Fadenbündel an den Kreuzungspunkten zu einem einstückigen Gebilde miteinander verbunden werden.

11. Verfahren zur Herstellung eines verstärkten Batteriegitters aus Blei oder einer Bleilegierung, umfassend das Einbringen der Vorform nach Anspruch 1 in eine Gießform für Batteriegitter, das Schließen der Form, das Erhitzen der Form samt Inhalt auf eine Temperatur, die zumindest so hoch wie der Schmelzpunkt des Bleis oder der Bleilegierung ist, des Erzeugens eines Vakuums im Formhohlraum und durch das Einführen von Blei oder einer Bleilegierung, damit dieses bzw. diese in die Fadenbündel eindringt und die Form ausfüllt, das Abkühlen der Form zur Verfestigung des Bleis oder der Bleilegierung, das Öffnen der Form und das Entfernen des verstärkten Gitters.

### Revendications

1. Préforme de réseau en feuille pour renforcer une grille d'accumulateur en plomb ou en alliage de plomb, comprenant un motif de faisceaux espacés de filaments non-organiques superposé à un motif de faisceaux espacés de filaments non-organiques, et décalé en direction par rapport à lui, lesdits motifs étant liés l'un à l'autre à des points de croisement des faisceaux de filaments.

2. Préforme suivant la revendication 1, dans laquelle les filaments non-organiques sont des fibres d'alumine.

3. Préforme suivant la revendication 2, dans laquelle les motifs sont liés l'un à l'autre à des points de croisement des faisceaux de filaments par l'intermédiaire de liaisons formées d'un liant volatil ayant un point de fusion d'au moins 0°C et un point d'ébullition inférieur à environ 300°C.

4. Préforme suivant la revendication 3, dans laquelle le liant volatil est de la glace.

5. Préforme suivant la revendication 1, dans laquelle du plomb est utilisé pour lier les motifs l'un à l'autre.

6. Préforme suivant la revendication 1, dans laquelle les faisceaux de filaments dans chaque motif sont essentiellement parallèles.

7. Préforme suivant la revendication 6, dans laquelle les motifs sont perpendiculaires l'un à l'autre.

8. Procédé de fabrication d'une préforme comprenant le dépôt de faisceaux de filaments non-organiques dans les rainures d'une pièce de fixation comportant un groupe de rainures croisant un autre groupe de rainures, le mouillage des faisceaux par introduction dans les rainures d'un liant volatil à une température supérieure à son point de fusion, le liant volatil ayant un point de fusion d'au moins 0°C et un point d'ébullition inférieur à environ 300°C, la congélation du liant volatil, liant ainsi les faisceaux de filaments aux points de croisement, et l'extraction de la préforme congelée du moule.

9. Procédé de fabrication d'une préforme pour renforcer une grille d'accumulateur en plomb ou en alliage de plomb, comprenant le dépôt de faisceaux de filaments non-organiques dans les rainures d'une pièce de fixation comportant un groupe de rainures croisant un autre groupe de rainures, la formation d'une liaison à chaque point de croisement, liant ainsi les groupes de faisceaux filamentaires en une structure d'une seule pièce et l'enlèvement de la préforme de la pièce de fixation.

10. Procédé suivant la revendication 9, dans lequel la liaison est formée par introduction dans les rainures d'un liant volatil à une température supérieure à son point de fusion, le liant volatil ayant un point de fusion d'au moins 0°C et un point d'ébullition inférieur à environ 300°C, et par congélation du liant volatil, liant ainsi les faisceaux filamentaires aux points de croisement en une structure unitaire.

11. Procédé de fabrication d'une grille d'accumulateur en plomb ou en alliage de plomb renforcé comprenant la mise en place de la préforme de la revendication 1 dans un moule de coulée d'une grille d'accumulateur, la fermeture du moule, la chauffage du moule et de son contenu jusqu'à une température au moins aussi élevée que le point de fusion du plomb ou de l'alliage de plomb, l'application du vide dans la cavité du moule, l'introduction du plomb ou de l'alliage de plomb pour infiltrer les faisceaux de filaments et remplir le moule, le refroidissement du moule pour solidifier le plomb ou l'alliage de plomb, l'ouverture du moule et l'enlèvement de la grille renforcée.

# F I G. 1

# F I G. 2